# EUROPÄISCHE PATENTSCHRIFT

(11) **EP 2 170 553 B1**
(45) Veröffentlichungstag und Bekanntmachung des Hinweises auf die Patenterteilung: **03.08.2011**
(21) Anmeldenummer: 08784616.8
(22) Anmeldetag: 04.07.2008
(51) Int. Cl.: B23Q 16/10

(54) **WERKZEUGREVOLVEREINHEIT FÜR EINE WERKZEUGMASCHINE**
TOOL REVOLVER UNIT FOR A MACHINE TOOL
UNITÉ DE TOURELLE PORTE-OUTILS POUR UNE MACHINE-OUTIL

(30) Priorität: 26.07.2007 DE 102007035030
(43) Veröffentlichungstag der Anmeldung: 07.04.2010
(73) Patentinhaber: Sauter Feinmechanik GmbH, 72555 Metzingen (DE)
(72) Erfinder: SAHM, Detlef, Dieter, 73669 Lichtenwald (DE)
(74) Vertreter: Bartels, Martin Erich Arthur
(86) Internationale Anmeldenummer: PCT/EP2008/005472
(87) Internationale Veröffentlichungsnummer: WO 2009/012875

(56) Entgegenhaltungen:
- EP-A- 0 343 334
- EP-A- 0 597 413
- WO-A-01/83162
- DE-B3-102005 021 202
- FR-A- 2 441 452

## Beschreibung

Die Erfindung betrifft eine Werkzeugrevolvereinheit für eine Werkzeugmaschine für die spanende Bearbeitung von Werkstücken, mit einem Gehäuse und einer relativ zu diesem um eine Achse drehbaren Werkzeugscheibe, mit einem Drehantrieb für eine Drehbewegung der Werkzeugscheibe, wobei eine eine lösbare Drehverriegelung zwischen Gehäuse und Werkzeugscheibe ermöglichende Verriegelungseinrichtung vorgesehen ist, und wobei die Verriegelungseinrichtung Verzahnungselemente mit einer Hirth-Verzahnung aufweist, die durch in Axialrichtung erfolgende Relativbewegungen in und außer Verzahnungseingriff miteinander bringbar sind.

Eine derartige Werkzeugrevolvereinheit ist aus WO 01/83162 A1 bekannt. Die bekannte Werkzeugrevolvereinheit umfasst einen von einem Gehäuse getragenen und relativ zu diesem Gehäuse über mindestens eine axiale Lagerstelle drehbaren Revolverkopf. Dadurch, dass die axiale Lagerstelle zwischen Revolverkopf und Gehäuse in Richtung des Revolverkopfes vor einem Verriegelungsglied angeordnet ist, dass das den Fluiddruck erzeugende hydraulische Medium zwischen dem Verriegelungsglied und dem Verbindungsteil einbringbar ist, und dass das Verbindungsteil das Verriegelungsglied derart untergreift, dass die axiale Lagerstelle sowohl im verriegelten als auch im entriegelten Zustand des Revolverkopfes eine Druckbelastung erfährt, sind auf kleinstem Bauraum mit wenig Bauteilen alle wichtigen Funktionen zusammengefasst, die derart in einfacher Weise einen die Bearbeitungsgenauigkeit schädigenden Einfluss der Schnittkraft-Belastung des Revolverkopfes, insbesondere bei einer sog. Rückseitenbearbeitung, ausschließen. Dadurch, dass anstelle einer Bremseinrichtung eine Verriegelungseinrichtung für die Werkzeugscheibe vorgesehen ist, ergibt sich der Vorteil, dass im Vergleich zu einer Lagesicherung mittels durch eine Bremseinrichtung erzeugter Haltemomente eine einwandfreie Lagefixierung im Verriegelungszustand erreicht wird.

Eine weitere Werkzeugrevolvereinheit ist bereits aus dem Dokument DE 10 2005 021 202 B3 bekannt. Bei dieser bekannten Lösung dient der eine Drehantrieb über ein Revolverdrehelement dem Antrieb der Werkzeugscheibe, um diese in eine Drehposition einzustellen, die für eine Bearbeitung mit einem betreffenden, an der Werkzeugscheibe angeordneten Bearbeitungswerkzeug vorgesehen ist. Der weitere Drehantrieb bietet die Möglichkeit, ein ggf. an der Werkzeugscheibe angebrachtes rotierendes Werkzeug über eine Welle anzutreiben.

Beim Betrieb derartiger Werkzeugrevolvereinheiten, insbesondere, wenn Dreharbeiten mit einem an der Werkzeugscheibe feststehend angebrachten Werkzeug durchgeführt werden, kommt es zu hohen Beanspruchungen mit entsprechend hohen Drehmomenten, die die Werkzeugscheibe aus der Sollposition zu verdrehen suchen. Um eine hochwertige Bearbeitung sicher zu stellen sind daher besondere Maßnahmen erforderlich, die eine sichere Festlegung der Werkzeugscheibe in der Soll-Drehposition ermöglichen.

Bei der erwähnten, bekannten Lösung ist hierfür eine hydraulisch betätigbare Bremseinrichtung vorgesehen, die durch Andrücken eines Bremsbelages an eine Bremsscheibe ein Haltemoment erzeugt. Bei Auftreten hoher Belastungen ist dadurch eine sichere Positionsfestlegung der Werkzeugscheibe nicht erreichbar.

Im Hinblick hierauf ist es bei bewegbaren, Bearbeitungswerkzeuge tragenden Einheiten ähnlicher Art bereits bekannt, die Lagefestlegung des das Werkzeug tragenden Bauelementes mittels eines formschlüssigen Rasteingriffes von mit einer Hirth-Verzahnung versehenen Verriegelungselementen sicherzustellen, wobei derartige Festlegeeinrichtungen ebenfalls hydraulisch betätigbar sind, siehe beispielsweise das Dokument DE 39 13 139 C2.

Zwar vermeidet die Benutzung einer Verrastung über mit Hirth-Verzahnung versehene Elemente die Nachteile, die bei der eingangs genannten bekannten Lösung durch unzureichende Haltemomente der Bremseinrichtung gegeben sind, bei den bekannten Lösungen mit fluidbetätigten Verzahnungselementen mit Hirth-Verzahnung müssen dafür jedoch die Nachteile eines hohen Bauaufwandes und eines großen Raumbedarfs für Druckräume, Fluidleitungen, Fluidanschlüsse und dergleichen in Kauf genommen werden.

Im Hinblick hierauf liegt der Erfindung die Aufgabe zugrunde, eine Werkzeugrevolvereinheit zur Verfügung zu stellen, die bei besonders kompakter Bauweise gleichzeitig eine besonders sichere Positionsfestlegung der Werkzeugscheibe, selbst bei Auftreten hoher Belastungen, sicherstellt und einen einfachen Direktantrieb der Werkzeugscheibe ermöglicht.

Erfindungsgemäß ist diese Aufgabe durch eine Werkzeugrevolvereinheit gelöst, die die Merkmale des Patentanspruches 1 in seiner Gesamtheit aufweist.

Danach besteht eine wesentliche Besonderheit der Erfindung darin, dass ein weiterer Drehantrieb, der zusätzlich zu dem der Positionierung der Werkzeugscheibe dienenden Drehantrieb vorhanden ist, als Stellmotor der Verriegelungseinrichtung für die lösbare Drehverriegelung zwischen Gehäuse und Werkzeugscheibe dient. Hierbei ermöglicht die motorische Betätigung der Verriegelungseinrichtung eine wesentlich vereinfachte und äußerst kompakte Bauweise, verglichen mit üblichen, fluidbetätigten Verriegelungseinrichtungen.

Bei beiden Drehantrieben handelt es sich erfindungsgemäß um elektromotorische Antriebe aus Rotor und Stator, wobei beide Drehantriebe Außenläufermotoren sind, deren Rotoren zueinander und zur Achse der Drehbewegung der Werkzeugscheibe konzentrisch angeordnet sind. Diese koaxiale Anordnung, bezogen auf die Achse der Drehbewegung der Werkzeugscheibe, eröffnet nicht nur die Möglichkeit eines besonders einfachen Direktantriebes der Werkzeugscheibe, indem der Rotor des betreffenden Au-Benläufermotors unmittelbar in eine Antriebswelle der Werkzeugscheibe übergeht, sondern ermöglicht auch eine besonders schlanke Gestaltung des Gehäuses.

Bei Benutzung elektromotorischer Antriebe aus Rotor und Stator kann in an sich bekannter Weise eine sensorlose Positionsbestimmung des betreffenden Rotors vorgesehen sein, beispielsweise unter Benutzung von Regeleinrichtungen und -verfahren solcher Art, wie es beispielsweise im Dokument DE 103 33 414 A1 offenbart ist. Hierbei entsteht innerhalb des Gehäuses kein zusätzlicher Platzbedarf. Vielmehr kann die über eine Schnittstelle mit der Maschinensteuerung verbundene Regeleinrichtung außerhalb des Gehäuses angeordnet und mit dem betreffenden Außenläufermotor im Gehäuse lediglich über dreiphasige Anschlussleitungen verbunden sein.

Erfindungsgemäß ist die Anordnung hierbei so getroffen dass der als Stellmotor der Verriegelungseinrichtung dienende Drehantrieb mit einem Stellgetriebe verbunden ist, das die vom Stellmotor bewirkte Drehbewegung in eine axiale Verschiebebewegung eines der mit Hirth-Verzahnung versehenen Verzahnungselemente umsetzt. Weiter weist das Stellgetriebe einen mit dem Rotor des zugehörigen Drehantriebs verbundenen, im Gehäuse drehbar und axial unverschiebbar gelagerten Nockenring mit einer Steuerkurve auf, über die bei Drehung ein Axialhub des an ihr geführten verschiebbaren Verzahnungselementes der Verriegelungseinrichtung erzeugbar ist. Bei der erfindungsgemäßen Ausgestaltung, die sich durch eine besonders kompakte Bauweise auszeichnet, ist die Anordnung hierbei so getroffen, dass die Steuerkurve eine zur Achse konzentrische Laufbahn bildet, an der Nockentaster bildende Laufrollen des einen Rastring bildenden, axial bewegbaren Verzahnungselementes geführt sind.

Vorzugsweise ist am Rastring eine die Laufrollen kraftschlüssig in Anlage an der Steuerkurve des Nockenringes haltende Vorspanneinrichtung vorhanden, die den Rastring für eine aus der Verriegelungsstellung in die Entriegellungsstellung der Verriegelungseinrichtung verlaufende Axialbewegung vorspannt. Die Verriegelungseinrichtung ist somit mechanisch rückstellbar ausgebildet.

In besonders einfacher und vorteilhafter Weise kann die Vorspanneinrichtung mindestens eine Druckfederanordnung aufweisen, die, die Hirth-Verzahnung des Rastringes durchgreifend, zwischen diesem und einem zugeordneten, axial und bewegbaren Verzahnungselement der Verriegelungseinrichtung eingespannt ist und die axiale Vorspannung des Rastringes erzeugt.

Die Verriegelungseinrichtung kann so gestaltet sein, dass zusätzlich zu dem Rastring zwei Verzahnungselemente vorhanden sind, nämlich ein mit der Werkzeugscheibe verbundener das eigentliche Revolverdrehelement bildender drehbarer Ring sowie ein diesen außenumfangseitig umgebender gehäusefester Ring, deren Hirth-Verzahnungen jeweils in einer Radialebene liegen und mit der Hirth-Verzahnung des Rastringes gemeinsam in Eingriff bringbar sind.

Nachstehend ist die Erfindung anhand eines in der Zeichnung dargestellten Ausführungsbeispieles im Einzelnen erläutert. Es zeigen:

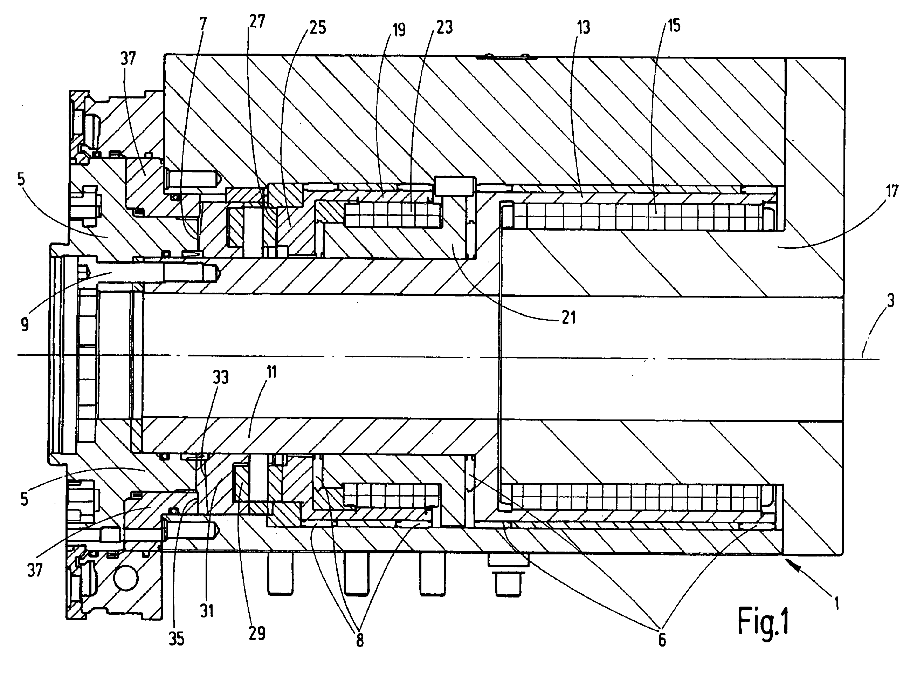

- Fig. 1: einen schematisch vereinfacht gezeichneten Längsschnitt des Gehäuses eines Ausführungsbeispieles der Werkzeugrevol- vereinheit, wobei in dem in der Zeichnung oberhalb der Längsachse gelegenen Teil der Betriebszustand dargestellt ist, bei dem sich die Verriegelungseinrichtung zur Drehverriege- lung der Werkzeugscheibe in der Verriegelungsstellung be- findet, während in dem unterhalb der Längsachse gelegenen Zeichnungsteil der Betriebszustand der Entriegelungsstellung der Verriegelungseinrichtung dargestellt ist;

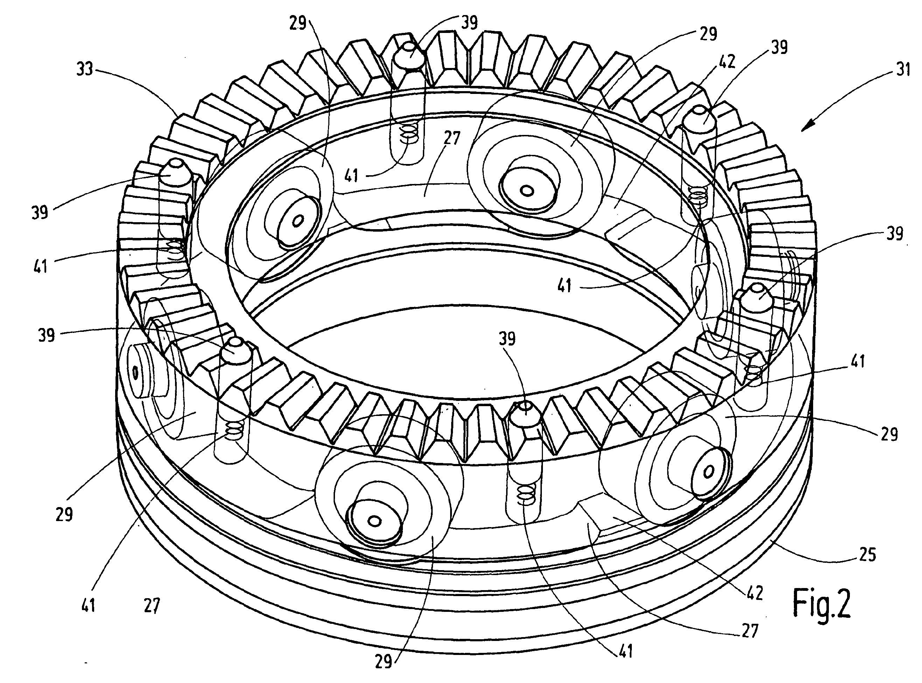

- Fig. 2: eine gegenüber Figur 1 vergrößert gezeichnete perspektivi- sche Darstellung lediglich eines Rastringes der Verriegelungs- einrichtung des Ausführungsbeispieles und

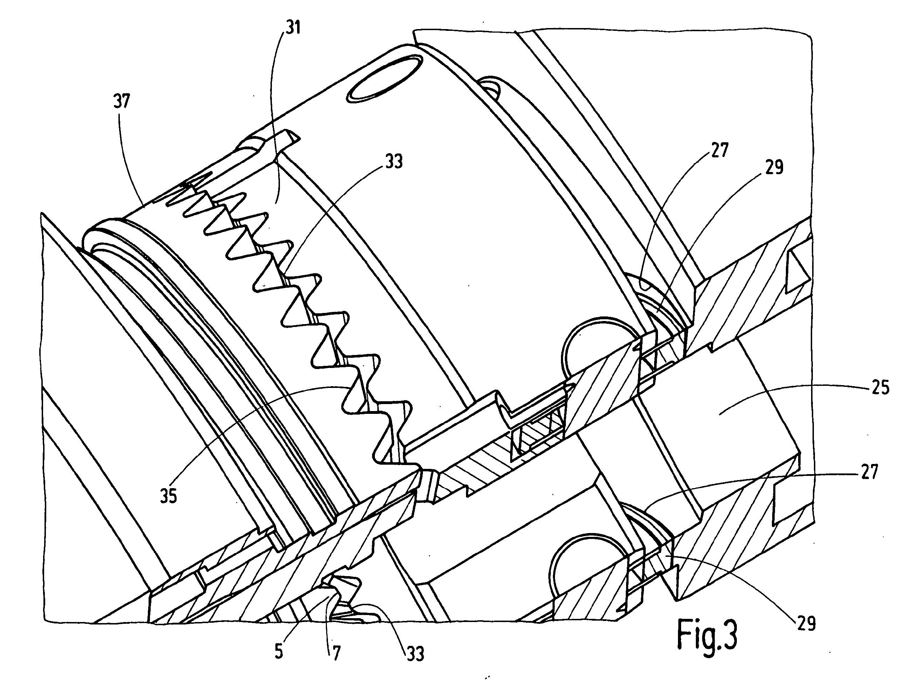

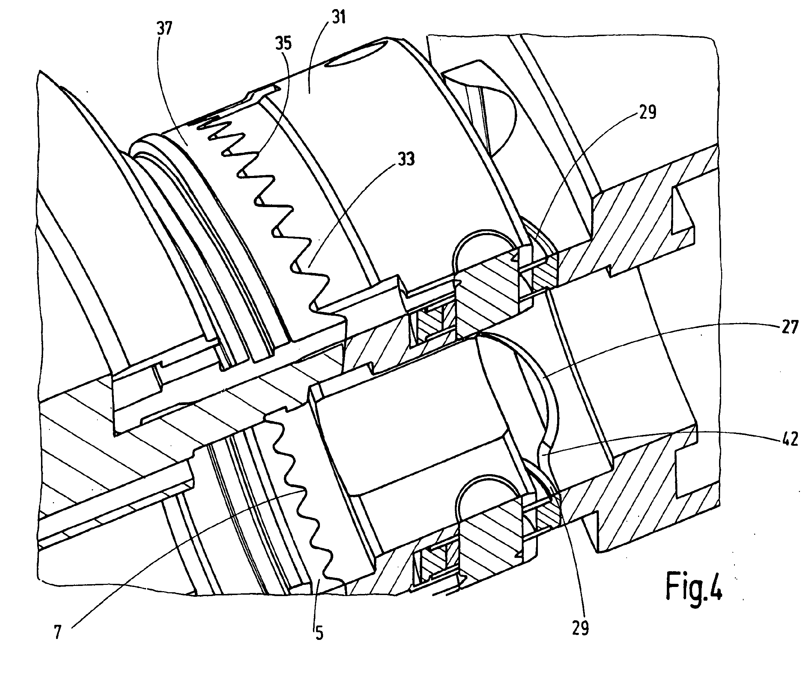

- Fig. 3 und 4: gegenüber Figur 2 in noch größerem Maßstab gezeichnete perspektivische Teildarstellungen lediglich eines Teilberei- ches der Verriegelungseinrichtung in Winkelschnittdarstel- lung, wobei Figur 3 den Betriebszustand der entriegelten Ver- riegelungseinrichtung und Figur 4 den Betriebszustand der verriegelten Verriegelungseinrichtung zeigt.

Das in Fig. 1 im Längsschnitt schematisiert dargestellte Ausführungsbeispiel weist ein im großen und ganzen quaderförmiges Gehäuse 1 auf, dessen außermittig gelegene Längsachse 3 die Drehachse für ein frontseitiges Verzahnungselement 5 bildet, das an seiner Außenseite die Aufnahme für eine nicht gezeigte, auf gewünschte Drehpositionen einstellbare Werkzeugscheibe bildet. Das Verzahnungselement 5 ist ein im Gehäuse 1 drehbar gelagerter Ringkörper, der an seinem im Gehäuseinneren befindlichen Ende mit einer zur Achse 3 konzentrischen Hirth-Verzahnung 7 versehen ist. Das Verzahnungselement 5 ist durch Verschraubung, von der lediglich eine Schraube 9 sichtbar ist, mit einer Hohlwelle 11 auf Drehung verbunden, deren glockenartiger Endabschnitt den Rotor 13 für einen zur Achse 3 konzentrischen Außenläufermotor bildet, dessen Stator 15 an einem am hinteren Endbereich des Gehäuses 1 befindlichen Motorträger 17 festgelegt ist. Der Stator 15 ist durch eine nicht dargestellte, an sich bekannte Positionsregeleinrichtung bestrombar, um über die Hohlwelle 11 das Verzahnungselement 5 in ausgewählte Drehpositionen einzustellen, bei denen die am Verzahnungselement 5 befestigte Werkzeugscheibe die für gewünschte Bearbeitungsvorgänge vorgesehene Drehposition einnimmt.

Koaxial zu dem aus Rotor 13 und Stator 15 gebildeten Außenläufermotor ist ein hierzu koaxialer und zur Drehachse 3 konzentrischer zweiter Drehantrieb vorhanden, der der Frontseite, das heißt dem Verzahnungselement 5, näher gelegen ist. Bei dem zweiten Drehantrieb handelt es sich ebenfalls um einen Außenläufermotor mit einem zur Drehachse konzentrischen Rotor 19, der einen an einem gehäusefesten Träger 21 festgelegten Stator 23 glockenartig umgibt. An seinem dem Verzahnungselement 5 zugewandten Endabschnitt geht der Rotor 19 in einen Nockenring 25 über, der an seinem dem Verzahnungselement 5 zugewandten Ende eine Profilierung aufweist, die Steuerkurven 27 bildet, deren Nockenprofil die Erzeugung eines Axialhubes von an den Steuerkurven 27 geführten Nockentastern ermögl icht, bei denen es sich um Laufrollen 29 handelt. Nähere Einzelheiten dieser Nokkensteuerung sind nachstehend unter Bezugnahme auf die Figuren 2 bis 4 erläutert. Jedenfalls bilden der Nockenring 25 in Zusammenwirkung mit den Laufrollen 29 ein Stellgetriebe, durch das in Abhängigkeit von einer Drehbewegung des Rotors 19 und damit des Nockenringes 25 eine axiale Verschiebebewegung eines zur Hohlwelle 11 konzentrischen Rastringes 31 erzeugbar ist, an dem die Laufrollen 29 gelagert sind. Dieser Rastring 31 weist an seinem der Hirth-Verzahnung 7 am Verzahnungselement 5 zugewandten Ende eine Hirth-Verzahnung 33 auf, die bei der der die Verriegelungsstellung bildenden, in Fig. 1 oberhalb der Achse 3 dargestellten Axialposition mit der Hirth-Verzahnung 7 am Verzahnungselement 5 in Verzahnungseingriff ist.

Bei dieser Verriegelungsstellung ist die Hirth-Verzahnung 33 des Rastringes 31 nicht nur mit der Hirth-Verzahnung 7 am Verzahnungselement 5 in Verzahnungseingriff, sondern gleichzeitig mit einer hierzu konzentrischen Hirth-Verzahnung 35 an einem weiteren Verzahnungselement 37, das am Gehäuse 1 fest verschraubt ist und einen im Querschnitt L-förmigen Ringkörper bildet. In dieser, in Fig. 1 oben dargestellten Verriegelungsstellung ist somit durch den Rastring 31 eine formschlüssige Verriegelung zwischen gehäusefestem Verzahnungselement 37 und mit der Werkzeugscheibe drehbarem Verzahnungselement 5 gebildet, während bei der in Fig. 1 unten dargestellten Entriegelungsstellung die Hirth-Verzahnungen 7, 33 und 35 ohne Verzahnungseingriff sind, sodass eine mittels des Außenläufermotors 13, 15 bewirkte Drehbewegung des Verzahnungselementes 5 und damit der Werkzeugscheibe stattfinden kann.

Fig. 2 zeigt in vergrößerter Darstellung Einzelheiten des Rastringes 31 mit den an ihm drehbar gelagerten Laufrollen 29, der stirnseitigen Hirth-Verzahnung 33 sowie der Steuerkurven 27 am nur teilweise dargestellten Nockenring 25. Wie aus Fig. 2 ebenfalls ersichtlich ist, ist der Rastring 31 mit einer Vorspanneinrichtung versehen, die die Laufrollen 29 kraftschlüssig in Anlage an den zugeordneten Steuerkurven 27 hält und die Hirth-Verzahnung 33 außer Eingriff mit den Hirth-Verzahnungen 7 und 35 der Verzahnungselemente 5 beziehungsweise 37 zu drängen sucht. Wie ersichtlich, weist diese Vorspanneinrichtung axial verschiebbare Druckstücke 39 auf, die, die Hirth-Verzahnung 33 durchgreifend, durch Druckfedern 41 vorgespannt sind und sich gegen die Hirth-Verzahnung 35 des Verzahnungselementes 37 abstützen. Dadurch kommt der Rastring 31 in die Entriegelungsstellung, wenn eine Rückdrehung des Nockenringes 25 erfolgt, beispielsweise durch Bestromen des Stators 23 des Außenläufermotors 19, 23.

Figuren 3 und 4 verdeutlichen die Lagebeziehungen der Verzahnungselemente 5, 31 und 37, die die Verriegelungseinrichtung bilden. Fig. 3 zeigt die Entriegelungsstellung, bei der sich die Laufrollen 29 in den tieferen Bereichen der Steuerkurven 27 befinden, sodass die Hirth-Verzahnung 33 des Rastringes 31 sowohl außer Eingriff mit der Hirth-Verzahnung 35 am gehäusefesten Verzahnungselementes 37 als auch außer Eingriff mit der Hirth-Verzahnung 7 am drehbaren Verzahnungselement 5 ist.

Demgegenüber sind bei der in Fig. 4 gezeigten Verriegelungsstellung die Laufrollen 29 auf die erhöhten Kurvenbereiche 42 der Steuerkurven 27 aufgelaufen, sodass die Hirth-Verzahnung 33 des Rastringes 31 sowohl mit der Hirth-Verzahnung 35 des festen Verzahnungselementes 37 als auch mit der Hirth-Verzahnung 7 am drehbaren Verzahnungselement 5 in Eingriff ist.

Wie die Figuren 3 und 4 ebenfalls verdeutlichen, sind die Zahnformen der zusammen wirkenden Hirth-Verzahnungen 7, 33 und 35 so gewählt, dass sich beim Zusammenfahren der Verzahnungen eine Fluchtungsausrichtung bewirkende Drehmomente ergeben und somit ein störungsfreier Verzahnungseingriff gewährleistet ist.

Wie aus Fig. 1 ersichtlich ist, ist die Hohlwelle 11 in dem Bereich, in dem sie den Rotor 13 des Drehantriebes für die Einstellung der Werkzeugscheibe bildet, im Gehäuse 1 über Wälzlager 6 gelagert. Der Rotor 19 und der mit diesem zusammenhängende Nockenring 25 der Verriegelungseinrichtung sind über Wälzlager 8 drehbar gelagert.

## Patentansprüche

1. Werkzeugrevolvereinheit für eine Werkzeugmaschine für die spanende Bearbeitung von Werkstücken,
- mit einem Gehäuse (1) und einer relativ zu diesem um eine Achse (3) drehbaren Werkzeugscheibe,
- mit einem Drehantrieb (13, 15) für eine Drehbewegung der Werkzeugscheibe,
- wobei eine eine lösbare Drehverriegelung zwischen Gehäuse (1) und Werkzeugscheibe ermöglichenden Verriegelungseinrichtung (5, 31, 37) vorgesehen ist, und
- wobei die Verriegelungseinrichtung Verzahnungselemente (5, 31, 37) mit einer Hirth-Verzahnung (7, 33, 35) aufweist, die duch in Axialrichtung erfolgende Relativbewegungen in und außer Verzahnungseingriff miteinander bringbar sind,
- **dadurch gekennzeichnet, dass** ein weiterer Drehantrieb (19, 23) als Stellmotor zur Steuerung der Verriegelungseinrichtung (5, 31, 37) vorgesehen ist,
- dass beide Drehantriebe elektromotorische Antriebe aus Rotor (13, 19) und Stator (15, 23) und Außenläufermotoren sind, deren Rotoren (13, 19) zueinander und zur Achse (3) der Drehbewegung der Werkzeugscheibe konzentrisch angeordnet sind,
- dass der als Stellmotor der Verriegelungseinrichtung dienende weitere Drehantrieb (19, 23) mit einem Stellgetriebe (25, 27, 29) verbunden ist, das die vom Stellmotor bewirkte Drehbewegung in eine axiale Verschiebebewegung eines axial verfahrbaren, mit Hirth-Verzahnung (33) versehenen Verriegelungselementes (31) umsetzt,
- dass das Stellgetriebe einen mit dem Rotor (19) des zugehörigen Drehantriebes (19, 23) verbundenen, im Gehäuse (1) drehbar und axial unverschiebbar gelagerten Nockenring (25) mit einer Steuerkurve (27) aufweist, über die bei Drehung ein Axialhub des an ihr geführten, axial verschiebbaren Verzahnungselementes (31) der Verriegelungseinrichtung (5, 31, 37) erzeugbar ist, und
- dass die Steuerkurve (27) eine zur Achse (3) konzentrische Laufbahn bildet, an der als Nockentaster dienende Laufrollen (29) des einen Rastring (31) bildenden, axial bewegbaren Verzahnungselementes geführt sind.

2. Werkzeugrevolvereinheit nach Anspruch 1, **dadurch gekennzeichnet, dass** am Rastring (31) eine die Laufrollen (29) kraftschlüssig in Anlage an der Steuerkurve (27) des Nockenringes (25) haltende Vorspanneinrichtung (39, 41) vorhanden ist, die den Rastring (31) für eine aus der Verriegelungsstellung in die Entriegelungsstellung der Verriegelungseinrichtung (5, 31, 37) verlaufende Axialbewegung vorspannt.

3. Werkzeugrevolvereinheit nach Anspruch 2, **dadurch gekennzeichnet, dass** die Vorspanneinrichtung mindestens eine Druckfederanordnung (41) aufweist, die, die Hirth-Verzahnung (33) des Rastringes (31) durchgreifend, zwischen diesem und einem zugeordneten axial unbewegbaren Verzahnungselement (37) der Verriegelungseinrichtung (5, 31, 37) eingespannt ist und die axiale Vorspannung des Rastringes (31) erzeugt.

4. Werkzeugrevolvereinheit nach Anspruch 2 oder 3, **dadurch gekennzeichnet, dass** die Verriegelungseinrichtung (5, 31, 37) als erstes Verzahnungselement einen mit der Werkzeugscheibe drehbaren Ringkörper (5) und einen diesen außenumfangseitig umgebenden, gehäusefesten Ringkörper (37) als zweites Verzahnungselement aufweist und dass die Hirth-Verzahnungen (7 bzw. 35) dieser Verzahnungselemente (5 und 37) jeweils in einer gemeinsamen Radialebene liegen und mit der Hirth-Verzahnung (33) des Rastringes (31) gemeinsam in Eingriff bringbar sind.

## Claims

1. A tool revolver unit for a machine tool for machining workpieces,
- comprising a housing (1) and a tool disc that can rotate about an axis (3) relative to said housing,
- comprising a rotary drive (13, 15) for a rotary motion of the tool disc,
- a locking device (5, 31, 37) enabling releasable rotational locking between the housing (1) and the tool disc being provided, and
- the locking device having toothed elements (5, 31, 37) with a Hirth coupling (7, 33, 35) which can be brought in and out of toothed engagement with one another by relative movements that take place in the axial direction,
- **characterised in that** a further rotary drive (19, 23) is provided as a servomotor for controlling the locking device (5, 31, 37),
- that both rotary drives are electro-motor drives that consist of rotors (13, 19) and stators (15, 23) and external rotor motors the rotors (13, 19) of which are arranged concentrically to one another and to the axis (3) of the rotary motion of the tool disc,
- that the further rotary drive (19, 23) serving as a servomotor of the locking device is connected to a control gear (25, 27, 29) that transforms the rotary motion produced by the servomotor into an axial displacement of an axially moveable locking element (31) provided with Hirth coupling (33),
- that the control gear has a cam ring (25) with a control curve (27) that is connected to the rotor (19) of the associated rotary drive (19, 23) and is mounted rotatably and axially non-moveably in the housing (1), and during rotation, an axial stroke of the moveable toothed element (31) of the locking device (5, 31, 37) guided thereon can be produced, and
- that the control curve (27) forms a track that is concentric to the axis (3) and on which there are guided rollers (29) of the axially moveable toothed element that forms a locking ring (31), said rollers serving as cam sensing devices.

2. The tool revolver unit according to Claim 1, **characterised in that** a pre-stressing device (39, 41) that holds the rollers (29) by friction in contact on the control curve (27) of the cam ring (25) is present on the locking ring (31), and said pre-stressing device pre-stresses the locking ring (31) for an axial movement that runs from the locking position into the unlocking position of the locking device (5, 31, 37).

3. The tool revolver unit according to Claim 2, **characterised in that** the pre-stressing device has at least one compression spring arrangement (41) that, extending through the Hirth coupling (33) of the locking ring (31) is clamped between the latter and a corresponding axially non-moveable toothed element (37) of the locking device (5, 31, 37) and produces the axial pre-stressing of the locking ring (31).

4. The tool revolver unit according to Claim 2 or 3, **characterised in that** the locking device (5, 31, 37) has a ring element (5) that can rotate with the tool disc as a first toothed element and a ring element (37) that surrounds the latter on the outer periphery side and is integral with the housing as a second toothed element, and **in that** the Hirth couplings (7 or 35) of these toothed elements (5 and 37) respectively lie in a common radial plane and can be engaged jointly with the Hirth coupling (33) of the locking ring (31).

## Revendications

1. Tourelle porte-outil pour une machine-outil d'usinage de pièces avec enlèvement de copeaux,
- comprenant un carter (1) et un disque porte-outil tournant par rapport à celui-ci autour d'un axe (3),
- comprenant un entraînement (13, 15) en rotation pour un mouvement de rotation du disque porte-outil,
- dans laquelle il est prévu un dispositif (5, 31, 37) de verrouillage permettant un verrouillage en rotation pouvant être déverrouillé, entre le carter (1) et le disque porte-outil, et
- dans laquelle le dispositif de verrouillage a des éléments (5, 31, 37) de denture ayant une denture (7, 33, 35) Hirth, qui peuvent être mis en prise et hors de prise entre eux par des mouvements relatifs s'effectuant dans la direction axiale,
- **caractérisée en ce qu'**il est prévu un autre entraînement (19, 23) en rotation sous la forme d'un servomoteur pour la commande du dispositif (5, 31, 37) de verrouillage,
- **en ce que** les deux entraînements en rotation sont des entraînements par moteur électrique composé d'un rotor (13, 19) et d'un stator (15, 23) et de moteurs rotoriques extérieurs, dont les rotors (13, 19) sont disposés concentriquement l'un par rapport à l'autre et par rapport à l'axe (3) du mouvement de rotation du disque porte-outil,
- **en ce que** l'autre entraînement (19, 23) en rotation servant de servomoteur du dispositif de verrouillage est relié à une transmission (25, 27, 29) de réglage, qui transforme le mouvement de rotation provoqué par le servomoteur en un mouvement de déplacement axial d'un élément (31) de verrouillage pouvant être déplacé axialement et muni d'une denture (33) Hirth,
- **en ce que** la transmission de réglage comporte un anneau (25) à came, qui est relié au rotor (19) de l'entraînement (19, 23) en rotation associé, qui est monté tournant et indéplaçable axialement et qui a une came (27) de commande, par laquelle lors de la rotation peut être produite une course axiale de l'élément (31) de denture du dispositif (5, 31, 37) de verrouillage, élément qui peut être déplacé axialement et qui est guidé sur la came, et
- **en ce que** la came (27) de commande forme une trajectoire concentrique à l'axe (3), sur laquelle sont guidés des galets (29) servant de galet de came de l'élément de denture formant un anneau (31) d'encliquetage et mobile axialement.

2. Tourelle porte-outil suivant la revendication 1, **caractérisée en ce que** sur l'anneau (31) d'encliquetage, il y a un dispositif (39, 41) de précontrainte maintenant les galets (29) de came à complémentarité de force en contact avec la came (27) de l'anneau (25) à came et qui précontraint l'anneau (31) d'encliquetage pour un mouvement axial allant de la position de verrouillage à la position de déverrouillage du dispositif (5, 31, 37) de verrouillage

3. Tourelle porte-outil suivant la revendication 2, **caractérisée en ce que** le dispositif de précontrainte comprend au moins un agencement (41) à ressort de compression, qui en pénétrant dans la denture (33) Hirth de l'anneau (31) d'encliquetage est encastré entre celui-ci et un élément (37) de denture associé immobile axialement du dispositif (5, 31, 37) de verrouillage et produit la précontrainte axiale de l'anneau (31) d'encliquetage.

4. Tourelle porte-outil suivant la revendication 2 ou 3, **caractérisée en ce que** le dispositif (5, 31, 37) de verrouillage comporte comme premier élément de denture une pièce (5) annulaire, qui peut tourner avec le disque porte-outil, et une pièce (37) annulaire, entourant du côté du pourtour extérieur cette pièce (5) annulaire, est fixée au carter en tant que deuxième élément de denture et **en ce que** les dentures (7 et 35) de Hirth de ces éléments (5 et 37) de denture se trouvent respectivement dans un plan radial commun et peuvent être mises en prise conjointement avec la denture (33) de Hirth de l'anneau (31) d'encliquetage.
